# EUROPEAN PATENT SPECIFICATION

(11) **EP 4 507 065 B1**
(45) Date of publication and mention of the grant of the patent: **23.09.2026**
(21) Application number: 23843238.9
(22) Date of filing: 10.07.2023
(51) Int. Cl.: G01K 1/14, H01M 10/04, H01M 10/42, H01M 10/48, H01M 50/105, H01M 50/178, H01M 50/186, H01M 50/553, H01M 50/562, H01M 50/569

(54) **SECONDARY BATTERY INCLUDING TEMPERATURE SENSOR, AND METHOD FOR MANUFACTURING SECONDARY BATTERY**
SEKUNDÄRBATTERIE MIT TEMPERATURSENSOR UND VERFAHREN ZUR HERSTELLUNG EINER SEKUNDÄRBATTERIE
BATTERIE SECONDAIRE COMPRENANT UN CAPTEUR DE TEMPÉRATURE, ET PROCÉDÉ DE FABRICATION DE BATTERIE SECONDAIRE

(30) Priority: 18.07.2022 KR 20220088571
(43) Date of publication of application: 12.02.2025
(73) Proprietor: LG Energy Solution, Ltd., Seoul 07335 (KR)
(72) Inventor: KO, Dong Wan, Daejeon 34122 (KR)
(74) Representative: Plasseraud IP
(86) International application number: PCT/KR2023/009762
(87) International publication number: WO 2024/019387

(56) References cited:
- JP-A- 2003 308 887
- JP-A- 2007 335 352
- JP-A- 2011 007 612
- JP-A- 2011 007 612
- JP-B2- 4 569 886
- KR-A- 20120 047 643
- KR-A- 20130 034 282

## Description

### TECHNICAL FIELD

### CROSS-REFERENCE TO RELATED APPLICATION

The present application claims the benefit of the priority of Korean Patent Application No. 10-2022-0088571, filed on July 18, 2022.

### TECHNICAL FIELD

The present invention relates to a secondary battery including a temperature sensor, and a method for manufacturing the secondary battery. Particularly, the present invention relates to asecondary battery including a temperature sensor capable of measuring a temperature inside a pouch, and a method for manufacturing the secondary battery.

### BACKGROUND ART

In general, secondary batteries refer to chargeable and dischargeable batteries, unlike primary batteries that is impossible to charge. Such secondary batteries are widely used in high-tech electronic devices such as phones, notebook computers, and camcorders.

The secondary batteries are classified into a can-type secondary battery, in which an electrode assembly is embedded in a metal can, and a pouch-type secondary battery in which an electrode assembly is embedded in a pouch. A can-type secondary battery includes an electrode assembly, a can accommodating the electrode assembly, and a cap assembly mounted in an opening of the can. The pouch-type secondary battery includes an electrode assembly and a pouch accommodating the electrode assembly. The electrode assembly is divided into a jelly-roll type (wound type) electrode assembly, a stack type electrode assembly, and a stack/folding type electrode assembly.

The pouch-type secondary battery use a method for measuring a temperature at the outside of the pouch when measuring the temperature.

However, in pouch-type secondary battery, there is a temperature difference between the inside and outside of the pouch, and thus, there is a limitation that it is difficult to accurately measure the temperature without measuring an internal temperature of the pouch.

Document KR 2013 0034282 A discusses a battery cell which includes a temperature sensor for accurately measuring the temperature of the electrode body formed in the pouch.

### DISCLOSURE OF THE INVENTION

### TECHNICAL PROBLEM

An object of the present invention is to provide a secondary battery including a temperature sensor capable of accurately measuring a temperature inside a pouch, and a method for manufacturing the secondary battery.

### TECHNICAL SOLUTION

The invention is as defined in the appended claims.

A secondary battery of the present invention includes: an electrode assembly; a pouch configured to accommodate the electrode assembly; an electrode lead which is coupled to an electrode tab provided on the electrode assembly, of which a front end is withdrawn out of the pouch, and in which an insertion hole extending from the inside to the outside of the pouch is defined; and a temperature sensor inserted into the insertion hole, wherein the temperature sensor comprises a temperature measurement part disposed inside the pouch to measure a temperature inside the pouch and a connector disposed outside the pouch.

The temperature sensor may be provided at a thickness smaller than or equal to that of the electrode lead in which the insertion hole is defined.

The temperature measurement part may be coated with an anti-oxidation protection layer.

The anti-oxidation protection layer may be provided as a polymer coating layer, and the polymer coating layer may be made of a Parylene material.

A lead film may be provided on the electrode lead disposed on a sealing part of the pouch, the temperature sensor may be provided with a connection part that is disposed between the temperature measurement part and the connector and is in contact with the lead film, and the connection part may be provided with a reinforcement layer that increases in adhesion to the lead film.

The reinforcement layer may be made of a metal material that is plated on the connection part.

The secondary battery may further include a sealing material provided between the temperature sensor and an inner wall of the insertion hole to seal a gap between the temperature sensor and the inner wall of the insertion hole.

The sealing material may be made of the same material as the lead film.

A method for manufacturing a secondary battery of the present invention include: a process (a) of preparing a temperature sensor; a process (b) of cutting a surface of one side of the electrode lead to process an insertion hole; a process (c) of coupling a rear end of the electrode lead to an electrode tab of an electrode assembly and inserting the temperature sensor into an insertion hole of the electrode lead; a process (d) of accommodating the electrode assembly into a pouch, wherein a temperature measurement part of the temperature sensor may be disposed inside the pouch, and a connector of the temperature sensor may be disposed outside the pouch.

In the process (b), the temperature sensor may be provided at a thickness smaller than or equal to that of the electrode lead in which the insertion hole is defined.

The process (a) may further include a process of applying an anti-oxidization protection layer on a surface of the temperature measurement part, wherein the anti-oxidization protection layer may be formed by depositing Parylene coating on the temperature measurement part.

The process (a) may further include a process of forming a reinforcement layer for increasing in adhesion to a connection part provided between the temperature measurement and the connector, wherein the reinforcement layer may be made of a metal material and formed by being plated on a surface of the connection part.

The process (c) may further include a process of inserting a sealing material into a gap between an inner wall of an insertion hole and the temperature sensor to seal the gap after the temperature sensor is inserted into the insertion hole of the electrode lead.

The method may further include, after the process (d),: a process (e) disposing a lead film surrounding the electrode lead to pass between the temperature measurement part and the connector; and a process of sealing a portion of the sealing part of the pouch, injecting an electrolyte into a non-sealed portion of the pouch to impregnate the electrode assembly, and sealing the non-sealed portion of the pouch to manufacture a secondary battery.

A temperature sensor of the present disclosure includes:
a temperature measurement part having a thermistor provided on one end thereof to measure a temperature; a connector provided on the other end thereof; and a connection part configured to connect the temperature measurement part to the connector, wherein the connection part may be provided with a reinforcement layer that increases in adhesion.

### ADVANTAGEOUS EFFECTS

The secondary battery of the present invention may include the temperature sensor that measures the internal temperature of the pouch, and the temperature sensor may be provided to be inserted into the insertion hole defined in the electrode lead. Due to these features, the increase in thickness of the sealing part of the pouch in which the electrode lead is disposed may be minimized, and in particular, the temperature sensor may be more stably fixed.

In addition, in the secondary battery of the present invention, the temperature sensor may be provided at the temperature less than or equal to that of the electrode lead in which the insertion hole is defined. Due to this feature, the sealing part of the pouch may be prevented from increasing in thickness.

In addition, in the secondary battery of the present invention, the anti-oxidation protection layer may be applied on the temperature measurement part of the temperature sensor, and the anti-oxidation protection layer may be made of a Parylene material. Due to this feature, the temperature measurement part may be greatly prevented from being oxidized by the electrolyte.

In addition, in the temperature sensor in the secondary battery of the present invention, the connection part may be provided between the temperature measurement part and the connector, and the connection part may be plated with the reinforcement layer made of the metal material to improve the adhesion to the lead film. Due to these features, the sealing force between the temperature sensor and the lead film may increase.

In addition, in the secondary battery of the present invention, the sealing material may be provided between the temperature sensor and the inner wall of the insertion hole of the electrode lead. Due to this feature, the portion between the temperature sensor and the inner wall of the insertion hole may be stably sealed.

### BRIEF DESCRIPTION OF THE DRAWINGS

FIG. 1 is a perspective view of a secondary battery according to a first embodiment of the present invention.
FIG. 2 is a plan view of FIG. 1.
FIG. 3 is a left view of FIG. 1.
FIG. 4 is a perspective view illustrating a temperature sensor and an electrode lead of the secondary battery according to the first embodiment of the present invention.
FIG. 5 is a plan view illustrating the temperature sensor illustrated in FIG. 4.
FIG. 6 is a cross-sectional view taken along line A-A of FIG. 4.
FIG. 7 is a plan view illustrating a state in which the temperature sensor and the electrode lead are coupled to each other in the present invention.
FIG. 8 is a flowchart illustrating a method for manufacturing the secondary battery according to the first embodiment of the present invention.
FIG. 9 is a perspective view of a temperature sensor according to a second embodiment of the present disclosure.
FIG. 10 is a plan view of FIG. 9.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Secondary battery according to first embodiment of the present invention]

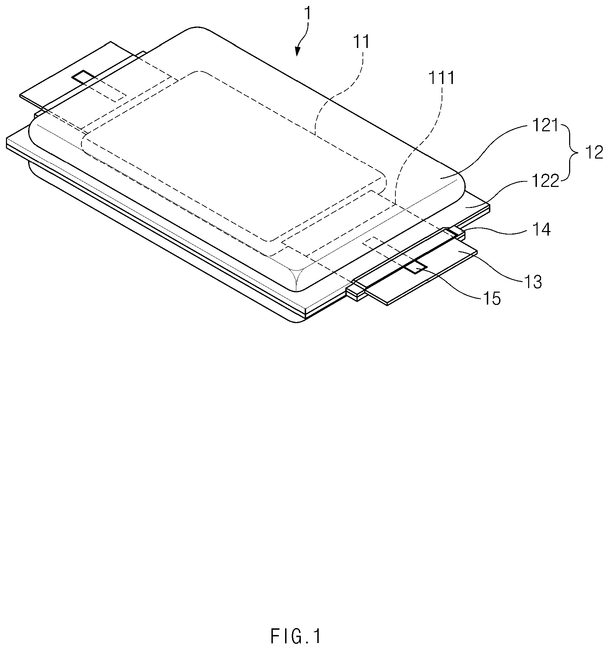

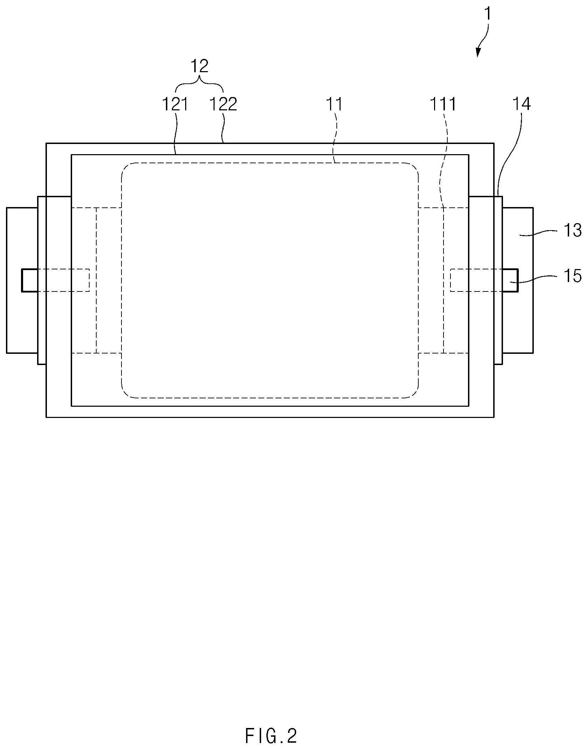

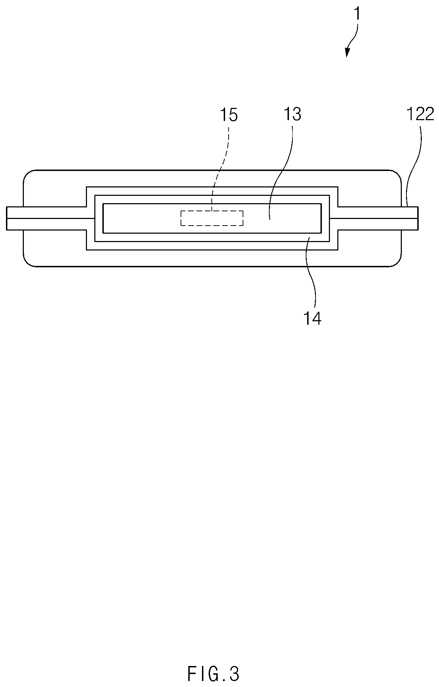

FIG. 1 is a perspective view of a secondary battery according to a first embodiment of the present invention, FIG. 2 is a plan view of FIG. 1, and FIG. 3 is a left view of FIG. 1.

As illustrated in FIGS. 1 to 3, a secondary battery 1 according to the first embodiment of the present invention has a structure including a temperature sensor 15 that measures a temperature inside a pouch 12.

That is, the secondary battery 1 according to the first embodiment of the present invention includes an electrode assembly 11, a pouch 12 accommodating the electrode assembly 11, an electrode lead 13 coupled to the electrode assembly 11, a lead film 14 provided on the electrode lead 13, and a temperature sensor 15 that measures a temperature inside the pouch 12.

### Electrode assembly

The electrode assembly 11 has a structure in which separators and electrodes are alternately stacked, and each of the electrodes includes an electrode tab 111.

The electrode comprises a positive electrode and a negative electrode, and the electrode tab 111 includes a positive electrode tab provided on the positive electrode and a negative electrode tab provided on the negative electrode.

### Pouch

The pouch 12 includes an accommodation part 121 that accommodates the electrode assembly 11, and a sealing part 122 disposed along an edge surface of the accommodation part 121 to seal the accommodation part 121.

### Electrode lead

The electrode lead 13 has a long rectangular plate shape and has a structure in which a rear end (end facing the electrode assembly in FIG. 2) is coupled to the electrode tab 111, and a front end is withdrawn out of the pouch 12.

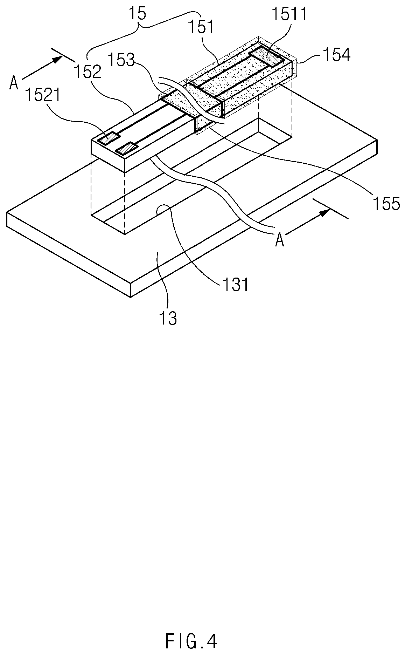

FIG. 4 is a perspective view illustrating the temperature sensor and the electrode lead of the secondary battery according to the first embodiment of the present invention.

Particularly, referring to FIG. 4, the electrode lead 13 is provided with an insertion hole 131 extending from the inside to the outside of the pouch 12, and referring to FIG. 4, the insertion hole 131 passes in a vertical direction (vertical direction when viewed in FIG. 4). That is, the insertion hole 131 is provided to be elongated in a full-length direction of the electrode lead 13.

The temperature sensor 15 is inserted into the insertion hole 131.

### Lead film

The lead film 14 is configured to increase in sealing force between the sealing part 122 of the pouch 12 and the electrode lead 13. That is, the lead film 14 is provided in a shape that surrounds a circumferential surface of the electrode lead 13 disposed on the sealing part 122 of the pouch 12.

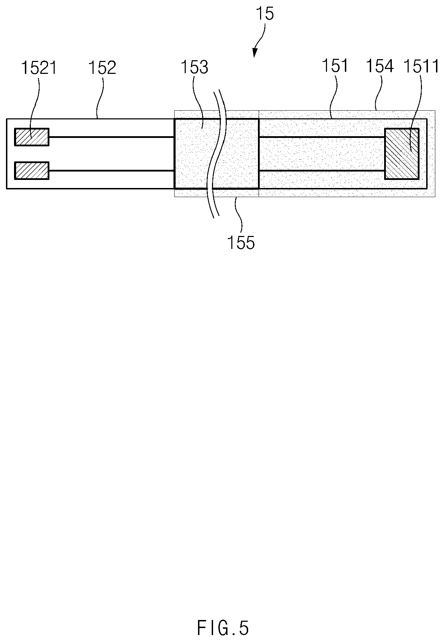

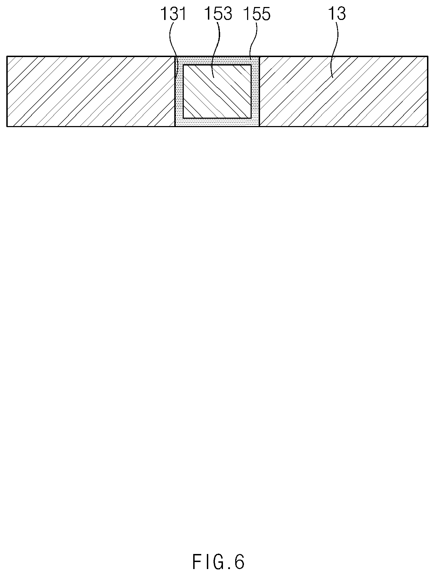

FIG. 5 is a plan view illustrating the temperature sensor 15 illustrated in FIG. 4, and FIG. 6 is a cross-sectional view taken along line A-A of FIG. 4.

### Temperature sensor

The temperature sensor 15 has a structure to be inserted into the insertion hole 131, as illustrated in FIGS. 5 and 6.

Particularly, the temperature sensor 15 includes a temperature measurement part 151 having a thermistor chip 1511 disposed inside the pouch 12 to measure the temperature inside the pouch 12 and a connector 152 having a terminal 1521 disposed outside the pouch 12.

Here, the connector 152 includes the terminal 1521 connected to a temperature measurement device (not shown), and the temperature measurement device compares an internal temperature of the pouch 12 received from the connector 152 to a set temperature in real time. Particularly, the temperature measurement device displays the internal temperature of the pouch 12 received from the connector 152 on an external display window in real time.

That is, the temperature sensor 15 measures the internal temperature of the pouch 12 through the thermistor chip 1511 of the temperature measurement part 151, and the connector 152 transmits the measured temperature that is measured by the thermistor chip 1511 to the temperature measurement device to inspect and display the internal temperature of the pouch 12.

As described above, the temperature sensor 15 may be inserted into the insertion hole 131 defined in the electrode lead 13 to increase in fixing force of the temperature sensor 15 and also accurately measure the internal temperature of the pouch 12 and quickly transmit the measured internal temperature to the outside. Particularly, the temperature sensor 15 may prevent the sealing force between the sealing part 122 of the pouch 12 and the lead film 14 from being deteriorated by minimizing the increase in thickness of the electrode lead 13.

The temperature sensor 15 may be provided at a thickness smaller than or equal to that of the electrode lead 13 in which the insertion hole 131 is defined. Preferably, the temperature sensor 15 may be provided at the same thickness as the electrode lead 13. Thus, an occurrence of a height difference between the temperature sensor 15 and the electrode lead 13 may be minimized, and as a result, adhesion and attachment between the temperature sensor 15 and the lead film 14 may increase.

Since the temperature measurement part 151 is disposed inside the pouch 12, oxidation may occur due to the electrolyte. To prevent the oxidation, an anti-oxidation protection layer 154 may be applied on a surface of the temperature measurement part 151 to prevent the temperature measurement part 151 from being oxidized by the electrolyte.

Here, the anti-oxidation protection layer 154 may be provided as a polymer coating layer. In more detail, the protection layer 154 for preventing the oxidation may be made of a Parylene material.

Here, the Parylene coating refers to polymer coating that is deposited on an object in the form of a gas in a vacuum state in a micro-thickness unit, regardless of a shape thereof. The Parylene coating may be used on portions that require LED surface protection, PCB surface protection, corrosion resistance, chemical resistance, chemical resistance, lubricity, etc.

The temperature sensor 15 is provided between the temperature measurement part 151 and the connector 152 and is provided with a connection part 153 that is in contact with the lead film 14. Here, the connection part 153 may be provided with a reinforcement layer 155 to increase in adhesion with the lead film 14.

The reinforcement layer 155 may be made of a metal material plated on a surface of the connection part 153, and the metal material may be gold or nickel (Ni). Thus, the reinforcement layer 155 may be plated on the surface of the connection part 153 to increase in adhesion and sealing force between the connection part 153 and the lead film 14.

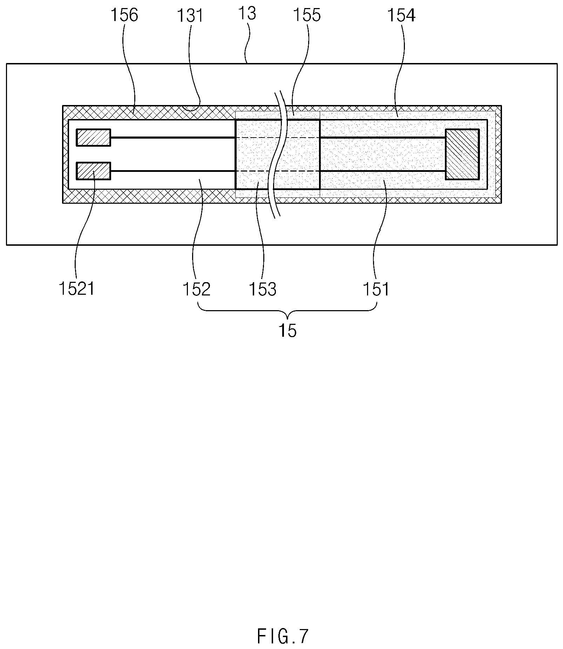

FIG. 7 is a plan view illustrating a state in which the temperature sensor and the electrode lead are coupled to each other in the present invention.

A sealing material 156 provided between the temperature sensor 15 and the inner wall of the insertion hole 131 to seal a gap between the temperature sensor 15 and the inner wall of the insertion hole 131 may be further provided. That is, as illustrated in FIG. 7, the sealing material 156 serves to close the gap between the temperature sensor 15 and the insertion hole 131. Thus, a gap between the insertion hole 131 and the temperature sensor 15 may be stably sealed.

The sealing material 156 may be made of the same material as the lead film 14. Preferably, the sealing material 156 may be polypropylene.

The temperature sensor 15 having the above-described structure may be stably fixed to the secondary battery by being inserted into the insertion hole 131 defined in the electrode lead 13 and may accurately measure the temperature inside the pouch 12.

Therefore, the secondary battery 1 according to the first embodiment of the present invention may accurately measure the temperature inside the pouch 12 by including the temperature sensor 15 that measures the temperature inside the pouch 12.

Hereinafter, a method for manufacturing the secondary battery 1 according to the first embodiment of the present invention will be described.

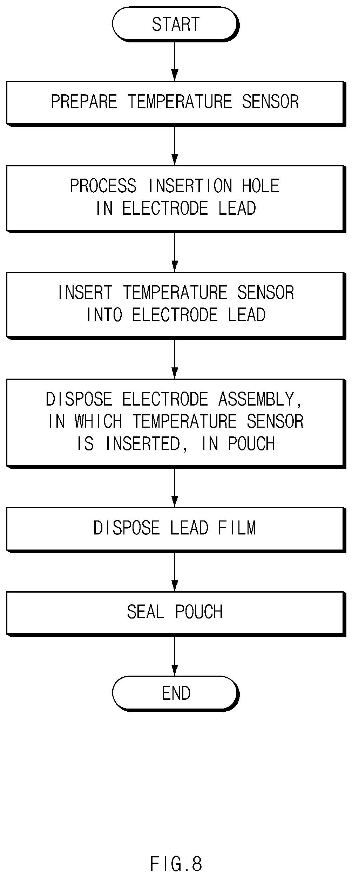

FIG. 8 is a flowchart illustrating a method for manufacturing the secondary battery according to the first embodiment of the present invention.

As illustrated in FIG. 8, a method for manufacturing a secondary battery according to the first embodiment of the present invention includes a process (a) of preparing a temperature sensor 15, a process (b) of processing an electrode lead 13, a process (c) of inserting the temperature sensor 15 into the electrode lead 13, a process (d) of disposing the electrode assembly 11, into which the temperature sensor 15 is inserted, in a pouch 12, a process (e) of disposing a lead film 14, and a process (f) of sealing the pouch 12.

In the process (a), the temperature sensor 15 is prepared. The temperature sensor 15 includes a temperature measurement part 151 having a thermistor chip 1511 that measures a temperature, a connector 152 through which the temperature of the temperature measurement part 151 is transmitted, and a connection part 153 that connects the temperature measurement part 151 to the connector 152.

The process (a) may further include a process of applying an anti-oxidation protection layer 154 on a surface of the temperature measurement part 151 to prevent the temperature measurement part 151 from being oxidized by an electrolyte. That is, the anti-oxidation protection layer 154 is formed by depositing Parylene coating on the temperature measurement part 151.

The process (a) may further include a process of forming a reinforcement layer 155 on a surface of the connection part 153 to increase in adhesion between the connection part 153 and the lead film 14. That is, the reinforcement layer 155 is made of a metal material and is formed by being plated on the surface of the connection part 153.

The metal material may be nickel (Ni) or gold.

In the process (b), an insertion hole 131 is processed by cutting or punching a surface of one side of the pouch 12. Here, the insertion hole 131 has a length so that one end there of is disposed inside the pouch 12, and the other end thereof is disposed outside the pouch 12. In addition, the insertion hole 131 may have a width corresponding to the length in a full-width direction of the temperature sensor 15 to minimize a gap between the insertion hole 131 and the temperature sensor 15 and prevent the temperature sensor 15 from moving within the insertion hole 131.

In addition, in the process (b), the temperature sensor 15 may be provided at a thickness smaller than or equal to that of the electrode lead 13 in which the insertion hole 131 is defined. Preferably, the temperature sensor 15 may be provided at the same thickness as the electrode lead 13. Thus, the occurrence of the height difference between the temperature sensor 15 and the electrode lead 13 may be prevented, and as a result, the adhesion and sealing force between the temperature sensor 15 and the lead film 14 may increase.

In the process (c), a rear end of the electrode lead 13 is coupled to an electrode tab 111 provided on the electrode assembly 11, and the temperature sensor 15 is installed in the insertion hole 131 of the electrode lead 13. Here, the temperature measurement part 151 of the temperature sensor 15 is disposed inside the pouch 12, and the connector 152 of the temperature sensor 15 is inserted to be disposed outside the housing 12.

The process (c) further includes a process of inserting a sealing material 156 into the gap between the inner wall of the insertion hole 131 and the temperature sensor to seal the gap after the temperature sensor 15 is inserted into the insertion hole 131 of the electrode lead 13. Thus, the gap between the insertion hole 131 and the temperature sensor 15 may be stably sealed. Here, the sealing material 156 may be made of the same material as the lead film 14. Thus, the adhesion between the sealing material 156 and the lead film 14 may increase.

In the process (d), the electrode assembly 11 is accommodated in the pouch 12, the temperature measurement part 151 of the temperature sensor 15 is disposed inside the pouch 12, and the connector 152 of the temperature sensor 15 is disposed outside the pouch 12.

In the process (e), the lead film 14 surrounding the electrode lead 13 is coupled to pass between the temperature measurement part 151 and the connector 152.

In the process (f), a portion of the sealing part 122 of the pouch 12 is sealed, and then, an electrolyte is injected into a non-sealed portion of the pouch 12 to impregnate the electrode assembly 11, thereby sealing the non-sealed portion of the pouch 12.

When the above processes are completed, a finished secondary battery 1 may be manufactured.

Hereinafter, in descriptions of another embodiment of the present invention, constituents having the same function as the above-mentioned embodiment have been given the same reference numeral in the drawings, and thus duplicated description will be omitted.

### [Temperature sensor according to second embodiment of the present invention]

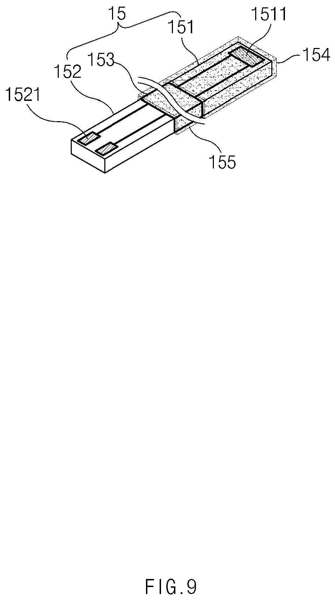

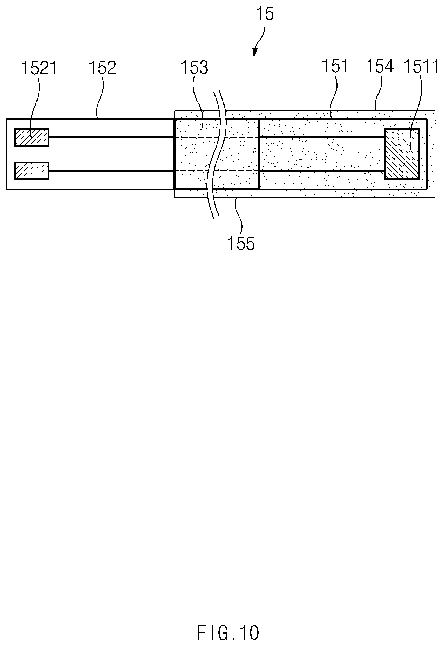

FIG. 9 is a perspective view of a temperature sensor according to a second embodiment of the present disclosure, and FIG. 10 is a plan view of FIG. 9.

A temperature sensor 15 according to the second embodiment of the present disclosure is manufactured by separately commercializing only the temperature sensor 15 from the secondary battery 1 according to the first embodiment described above.

That is, as illustrated in FIGS. 9 and 10, the temperature sensor 15 according to the second embodiment of the present disclosure includes a thermistor chip 1511 provided at one end thereof to measure a temperature, a connector 152 provided at the other end thereof, and a connection part 153 connecting the temperature measurement part 151 to the connector 152.

Here, the connection part 153 may be provided with a reinforcement layer 155 to increase in adhesion, and the reinforcement layer 155 may be made of a metal material that is plated on the connection part 153. Since the reinforcement layer 155 has been described in detail in the first embodiment, detailed description thereof will be omitted.

The temperature measurement part 151 may be coated with an anti-oxidation protection layer 154. Since the anti-oxidation protection layer 154 has been described in detail in the first embodiment, detailed description thereof will be omitted.

Therefore, the temperature sensor 15 according to the second embodiment of the present disclosure may improve marketability by commercializing only the temperature sensor 15 separately from the secondary battery 1 according to the first embodiment.

### [Description of the Symbols]

1: Secondary battery
11: Electrode assembly
111: Electrode tab
12: Pouch
121: Accommodation part
122: Sealing part
13: Electrode lead
131: Insertion hole
14: Lead film
15: Temperature sensor
151: Temperature measurement part
1511: Thermistor chip
152: Connector
153: Connection part
154: Anti-oxidation protection layer
155: Reinforcement layer
156: Sealing material

## Claims

1. A secondary battery (1) comprising:
an electrode assembly (11);
a pouch (12) configured to accommodate the electrode assembly (11);
an electrode lead (13) which is coupled to an electrode tab provided (111) on the electrode assembly (11), of which a front end of the electrode lead (13) is withdrawn out of the pouch (12), and in which an insertion hole (131) extending from the inside to the outside of the pouch (12) is defined; and
a temperature sensor (15) inserted into the insertion hole (131), wherein the temperature sensor (15) comprises a temperature measurement part (151) disposed inside the pouch (12) to measure a temperature inside the pouch (12) and a connector (152) disposed outside the pouch (12).

2. The secondary battery (1) of claim **1,** wherein the temperature sensor (15) is provided at a thickness smaller than or equal to that of the electrode lead (13) in which the insertion hole (131) is defined.

3. The secondary battery (1) of claim **1,** wherein the temperature measurement part (151) is coated with an anti-oxidation protection layer (154).

4. The secondary battery (1) of claim 3, wherein the anti-oxidation protection layer (154) is provided as a polymer coating layer, and
the polymer coating layer is made of a Parylene material.

5. The secondary battery (1) of claim 1, wherein a lead film (14) is provided on the electrode lead (13) disposed on a sealing part (122) of the pouch (12),
the temperature sensor (15) is provided with a connection part (153) that is disposed between the temperature measurement part (151) and the connector (152) and is in contact with the lead film (14), and
the connection part (153) is provided with a reinforcement layer (155) that increases in adhesion to the lead film (14).

6. The secondary battery (1) of claim 5, wherein the reinforcement layer (155) is made of a metal material that is plated on the connection part (153).

7. The secondary battery (1) of claim 5, further comprising a sealing material (156) provided between the temperature sensor (15) and an inner wall of the insertion hole (131) to seal a gap between the temperature sensor (15) and the inner wall of the insertion hole (131).

8. The secondary battery (1) of claim 7, wherein the sealing material (156) is made of the same material as the lead film.

9. A method for manufacturing a secondary battery (1), the method comprising:
a process (a) of preparing a temperature sensor (15);
a process (b) of cutting a surface of one side of the electrode lead (13) to process an insertion hole (131);
a process (c) of coupling a rear end of the electrode lead (13) to an electrode tab (111) of an electrode assembly (11) and inserting the temperature sensor (15) into an insertion hole (131) of the electrode lead (13);
a process (d) of accommodating the electrode assembly (11) into a pouch (12), wherein a temperature measurement part (151)of the temperature sensor (15) is disposed inside the pouch (12), and a connector (152) of the temperature sensor (15)is disposed outside the pouch (12).

10. The method of claim 9, wherein, in the process (b), the temperature sensor (15) is provided at a thickness smaller than or equal to that of the electrode lead (13) in which the insertion hole (131) is defined.

11. The method of claim **9,** wherein the process (a) further comprises a process of applying an anti-oxidization protection layer (154) on a surface of the temperature measurement part (151),
wherein the anti-oxidization protection layer (154) is formed by depositing Parylene coating on the temperature measurement part (151).

12. The method of claim **9,** wherein the process (a) further comprises a process of forming a reinforcement layer (155) for increasing in adhesion to a connection part (153) provided between the temperature measurement part (151) and the connector (152),
wherein the reinforcement layer (155) is made of a metal material and formed by being plated on a surface of the connection part (153).

13. The method of claim **9,** wherein the process (c) further comprises a process of inserting a sealing material (156) into a gap between an inner wall of an insertion hole (131) and the temperature sensor (15) to seal the gap after the temperature sensor (15) is inserted into the insertion hole (131) of the electrode lead (13).

14. The method of claim 9, further comprising, after the process (d),:
a process (e) disposing a lead film (14) surrounding the electrode lead (13) to pass between the temperature measurement part (151) and the connector (152); and
a process of sealing a portion of the sealing part (122) of the pouch (12), injecting an electrolyte into a non-sealed portion of the pouch (12) to impregnate the electrode assembly (11), and sealing the non-sealed portion of the pouch (12) to manufacture a secondary battery (1).

## Patentansprüche

1. Sekundärbatterie (1), umfassend:
eine Elektrodenanordnung (11);
eine Tasche (12), die konfiguriert ist, um die Elektrodenanordnung (11) aufzunehmen;
eine Elektrodenleitung (13), die mit einer an der Elektrodenanordnung (11) vorgesehenen Elektrodenfahne (111) gekoppelt ist, wobei ein vorderes Ende der Elektrodenleitung (13) aus der Tasche (12) herausgezogen ist, und in der ein Einführungsloch (131) definiert ist, das sich von der Innenseite zur Außenseite der Tasche (12) erstreckt; und
einen Temperatursensor (15), der in das Einführungsloch (131) eingeführt ist, wobei der Temperatursensor (15) einen Temperaturmessteil (151), der innerhalb der Tasche (12) angeordnet ist, um eine Temperatur innerhalb der Tasche (12) zu messen, und einen Verbinder (152) umfasst, der außerhalb der Tasche (12) angeordnet ist.

2. Sekundärbatterie (1) nach Anspruch 1, wobei der Temperatursensor (15) mit einer Dicke vorgesehen ist, die kleiner oder gleich derjenigen der Elektrodenleitung (13) ist, in der das Einführungsloch (131) definiert ist.

3. Sekundärbatterie (1) nach Anspruch 1, wobei der Temperaturmessteil (151) mit einer Antioxidationsschutzschicht (154) beschichtet ist.

4. Sekundärbatterie (1) nach Anspruch 3, wobei die Antioxidationsschutzschicht (154) als eine Polymerbeschichtungsschicht vorgesehen ist, und die Polymerbeschichtungsschicht aus einem Parylen-Material hergestellt ist.

5. Sekundärbatterie (1) nach Anspruch 1, wobei eine Leitfolie (14) an der Elektrodenleitung (13) vorgesehen ist, die an einem Dichtungsteil (122) der Tasche (12) angeordnet ist,
der Temperatursensor (15) mit einem Verbindungsteil (153) versehen ist, das zwischen dem Temperaturmessteil (151) und dem Verbinder (152) angeordnet ist und in Kontakt mit der Leitfolie (14) steht, und
der Verbindungsteil (153) mit einer Verstärkungsschicht (155) versehen ist, die die Haftung an der Leitfolie (14) erhöht.

6. Sekundärbatterie (1) nach Anspruch 5, wobei die Verstärkungsschicht (155) aus einem Metallmaterial hergestellt ist, das auf den Verbindungsteil (153) plattiert ist.

7. Sekundärbatterie (1) nach Anspruch 5, ferner umfassend ein Dichtungsmaterial (156), das zwischen dem Temperatursensor (15) und einer Innenwand des Einführungslochs (131) vorgesehen ist, um einen Spalt zwischen dem Temperatursensor (15) und der Innenwand des Einführungslochs (131) abzudichten.

8. Sekundärbatterie (1) nach Anspruch 7, wobei das Dichtungsmaterial (156) aus demselben Material wie die Leitfolie hergestellt ist.

9. Verfahren zum Herstellen einer Sekundärbatterie (1), wobei das Verfahren umfasst:
einen Verfahrensschritt (a) des Vorbereitens eines Temperatursensors (15);
einen Verfahrensschritt (b) des Schneidens einer Oberfläche einer Seite der Elektrodenleitung (13), um ein Einführungsloch (131) zu bearbeiten;
einen Verfahrensschritt (c) des Koppelns eines hinteren Endes der Elektrodenleitung (13) mit einer Elektrodenfahne (111) einer Elektrodenanordnung (11) und des Einführens des Temperatursensors (15) in ein Einführungsloch (131) der Elektrodenleitung (13);
einen Verfahrensschritt (d) des Aufnehmens der Elektrodenanordnung (11) in einer Tasche (12), wobei ein Temperaturmessteil (151) des Temperatursensors (15) innerhalb der Tasche (12) angeordnet ist, und ein Verbinder (152) des Temperatursensors (15) außerhalb der Tasche (12) angeordnet ist.

10. Verfahren nach Anspruch 9, wobei im Verfahrensschritt (b) der Temperatursensor (15) mit einer Dicke vorgesehen ist, die kleiner oder gleich derjenigen der Elektrodenleitung (13) ist, in der das Einführungsloch (131) definiert ist.

11. Verfahren nach Anspruch 9, wobei der Verfahrensschritt (a) ferner einen Verfahrensschritt des Aufbringens einer Antioxidationsschutzschicht (154) auf einer Oberfläche des Temperaturmessteils (151) umfasst, wobei die Antioxidationsschutzschicht (154) durch Abscheiden einer Parylen-Beschichtung auf dem Temperaturmessteil (151) gebildet wird.

12. Verfahren nach Anspruch 9, wobei der Verfahrensschritt (a) ferner einen Verfahrensschritt des Bildens einer Verstärkungsschicht (155) zur Erhöhung der Haftung an einem Verbindungsteil (153) umfasst, das zwischen dem Temperaturmessteil (151) und dem Verbinder (152) vorgesehen ist, wobei die Verstärkungsschicht (155) aus einem Metallmaterial hergestellt und durch Plattieren auf einer Oberfläche des Verbindungsteils (153) gebildet wird.

13. Verfahren nach Anspruch 9, wobei der Verfahrensschritt (c) ferner einen Verfahrensschritt des Einführens eines Dichtungsmaterials (156) in einen Spalt zwischen einer Innenwand eines Einführungslochs (131) und dem Temperatursensor (15) umfasst, um den Spalt abzudichten, nachdem der Temperatursensor (15) in das Einführungsloch (131) der Elektrodenleitung (13) eingeführt wurde.

14. Verfahren nach Anspruch 9, ferner umfassend nach dem Verfahrensschritt (d):
einen Verfahrensschritt (e) des Anordnens einer Leitfolie (14), die die Elektrodenleitung (13) umgibt, um zwischen dem Temperaturmessteil (151) und dem Verbinder (152) hindurchzugehen; und
einen Verfahrensschritt des Abdichtens eines Abschnitts des Dichtungsteils (122) der Tasche (12), des Injizierens eines Elektrolyten in einen nicht abgedichteten Abschnitt der Tasche (12), um die Elektrodenanordnung (11) zu imprägnieren, und des Abdichtens des nicht abgedichteten Abschnitts der Tasche (12), um eine Sekundärbatterie (1) herzustellen.

## Revendications

1. Batterie secondaire (1) comprenant :
un ensemble d'électrodes (11) ;
une poche (12) configurée pour loger l'ensemble d'électrodes (11) ;
une sortie d'électrode (13) qui est couplée à une languette d'électrode (111) prévue sur l'ensemble d'électrodes (11), dont une extrémité avant de la sortie d'électrode (13) est retirée hors de la poche (12), et dans laquelle un trou d'insertion (131) s'étendant de l'intérieur vers l'extérieur de la poche (12) est défini ; et
un capteur de température (15) inséré dans le trou d'insertion (131), dans laquelle le capteur de température (15) comprend une partie de mesure de température (151) disposée à l'intérieur de la poche (12) pour mesurer une température à l'intérieur de la poche (12) et un connecteur (152) disposé à l'extérieur de la poche (12).

2. Batterie secondaire (1) selon la revendication 1, dans laquelle le capteur de température (15) est prévu avec une épaisseur inférieure ou égale à celle de la sortie d'électrode (13) dans laquelle le trou d'insertion (131) est défini.

3. Batterie secondaire (1) selon la revendication 1, dans laquelle la partie de mesure de température (151) est revêtue d'une couche de protection anti-oxydation (154).

4. Batterie secondaire (1) selon la revendication 3, dans laquelle la couche de protection anti-oxydation (154) est prévue sous la forme d'une couche de revêtement polymère, et la couche de revêtement polymère est constituée d'un matériau Parylène.

5. Batterie secondaire (1) selon la revendication 1, dans laquelle un film conducteur (14) est prévu sur la sortie d'électrode (13) disposée sur une partie de scellement (122) de la poche (12),
le capteur de température (15) est pourvu d'une partie de connexion (153) qui est disposée entre la partie de mesure de température (151) et le connecteur (152) et est en contact avec le film conducteur (14), et
la partie de connexion (153) est pourvue d'une couche de renforcement (155) qui augmente l'adhérence au film conducteur (14).

6. Batterie secondaire (1) selon la revendication 5, dans laquelle la couche de renforcement (155) est constituée d'un matériau métallique qui est plaqué sur la partie de connexion (153).

7. Batterie secondaire (1) selon la revendication 5, comprenant en outre un matériau de scellement (156) prévu entre le capteur de température (15) et une paroi intérieure du trou d'insertion (131) pour sceller un espace entre le capteur de température (15) et la paroi intérieure du trou d'insertion (131).

8. Batterie secondaire (1) selon la revendication 7, dans laquelle le matériau de scellement (156) est constitué du même matériau que le film conducteur.

9. Procédé de fabrication d'une batterie secondaire (1), le procédé comprenant :
une étape (a) de préparation d'un capteur de température (15) ;
une étape (b) de découpe d'une surface d'un côté de la sortie d'électrode (13) pour ménager un trou d'insertion (131) ;
une étape (c) de couplage d'une extrémité arrière de la sortie d'électrode (13) à une languette d'électrode (111) d'un ensemble d'électrodes (11) et d'insertion du capteur de température (15) dans un trou d'insertion (131) de la sortie d'électrode (13) ;
une étape (d) de logement de l'ensemble d'électrodes (11) dans une poche (12), dans lequel une partie de mesure de température (151) du capteur de température (15) est disposée à l'intérieur de la poche (12), et un connecteur (152) du capteur de température (15) est disposé à l'extérieur de la poche (12).

10. Procédé selon la revendication 9, dans lequel, dans l'étape (b), le capteur de température (15) est prévu avec une épaisseur inférieure ou égale à celle de la sortie d'électrode (13) dans laquelle le trou d'insertion (131) est défini.

11. Procédé selon la revendication 9, dans lequel l'étape (a) comprend en outre une étape d'application d'une couche de protection anti-oxydation (154) sur une surface de la partie de mesure de température (151), dans lequel la couche de protection anti-oxydation (154) est formée par dépôt d'un revêtement de Parylène sur la partie de mesure de température (151).

12. Procédé selon la revendication 9, dans lequel l'étape (a) comprend en outre une étape de formation d'une couche de renforcement (155) pour augmenter l'adhérence à une partie de connexion (153) prévue entre la partie de mesure de température (151) et le connecteur (152), dans lequel la couche de renforcement (155) est constituée d'un matériau métallique et formée par placage sur une surface de la partie de connexion (153).

13. Procédé selon la revendication 9, dans lequel l'étape (c) comprend en outre une étape d'insertion d'un matériau de scellement (156) dans un espace entre une paroi intérieure d'un trou d'insertion (131) et le capteur de température (15) pour sceller l'espace après que le capteur de température (15) est inséré dans le trou d'insertion (131) de la sortie d'électrode (13).

14. Procédé selon la revendication 9, comprenant en outre, après l'étape (d), :
une étape (e) de disposition d'un film conducteur (14) entourant la sortie d'électrode (13) pour passer entre la partie de mesure de température (151) et le connecteur (152) ; et
une étape de scellement d'une portion de la partie de scellement (122) de la poche (12),
d'injection d'un électrolyte dans une portion non scellée de la poche (12) pour imprégner l'ensemble d'électrodes (11), et de scellement de la portion non scellée de la poche (12) pour fabriquer une batterie secondaire (1).
